# EUROPEAN PATENT APPLICATION

(11) **EP 4 497 567 A1**
(43) Date of publication of application: **29.01.2025**
(21) Application number: 24188962.5
(22) Date of filing: 16.07.2024
(51) Int. Cl.: B29C 48/515, B29C 48/84, B29C 48/85, B29C 48/92, B29C 48/80, B29C 64/10, B29C 48/27

(54) **EXTRUDING AND/OR MIXING SCREW, METHOD FOR MAKING THE SAME, EXTRUDER AND/OR MIXER APPARATUS COMPRISING SAID SCREW, AND PLANT**

(30) Priority: 28.07.2023 IT 202300015975
(71) Applicant: Körber Technologies S.p.A., 31038 Paese (TV) (IT)
(72) Inventor: BOTTACCO, Igor, Paese (TV) (IT); PAVANETTO, Jader, Paese (TV) (IT)
(74) Representative: Baron Toaldo, Alessio

(57) **Abstract**

The present invention relates to an extrusion and/or mixing screw for extruding and/or mixing a material, in particular a temperature-sensitive material. The screw includes an elongated body, in turn comprising a core and at least one material processing element extending radially protruding from said core. In particular, the elongated body further comprises fluid conduit means, provided with a fluid inlet and with a fluid outlet, adapted to receive a flow of a temperature conditioning fluid operatively adapted to regulate a temperature of at least a part of said elongated body. Furthermore, the present invention relates to a method for making said screw, to an extrusion and/or mixing apparatus comprising said screw, and to a plant comprising and extrusion and/or mixing apparatus.

## Description

### TECHNICAL FIELD OF THE INVENTION

The present invention relates to an extrusion and/or mixing screw for extruding and/or mixing materials, in particular temperature-sensitive material, by means of an extrusion and/or mixing apparatus. Furthermore, the present invention relates to a method for making said screw, an extrusion and/or mixing apparatus comprising said screw, and a plant comprising an extrusion and/or mixing apparatus.

Although not limited thereto, in particular, the present invention relates to the tobacco industry and the production of smoke articles, which provide for the processing of material comprising vegetable substances and/or alkaloids. Preferably, the present invention generally relates to an extrusion and/or mixing screw for an extrusion and/or mixing apparatus for processing materials comprising various types of vegetable substances and/or alkaloids in reconstituted form or a mixture of various vegetable substances and/or alkaloids in reconstituted form, such as for example tobacco for smoke articles, cannabis for medical or pharmaceutical use, aromatic plants for food use, and the like, or combinations thereof.

Therefore, the description below will mainly refer to an extrusion and/or mixing screw and to an extrusion and/or mixing apparatus for processing a material comprising tobacco. However, the extrusion and/or mixing screw and the extrusion and/or mixing apparatus according to the present invention may be generally used for processing any material having components of natural origin, such as for example material comprising vegetable substances and/or alkaloids, or for processing any temperature-sensitive material, such as for example thermoplastic, thermosetting, expandable materials and the like.

### STATE OF THE PRIOR ART

Extrusion apparatuses comprising a barrel element provided with a supply opening and with an extrusion opening are known in the state of the art. Inside the barrel element there is arranged at least one extrusion screw which can be rotated about its axis by means of a motor, so as to extrude the material introduced through the supply opening.

The extrusion of temperature-sensitive material requires an appropriate control of the processing conditions, and in particular the actual temperature of the material inside the barrel element.

For example, the extrusion of materials having relatively high melting/processing temperature requires a control of the temperature of the material to avoid an undesired excessive cooling thereof in the barrel element, during the extrusion process.

Alternatively, the extrusion of materials having a relatively low melting/processing temperature or thermally activatable material, such as thermosetting or expandable material, requires a control of the temperature of the material so as to avoid an undesired excessive heating thereof and an ensuing degradation or activation thereof inside the barrel element, during the extrusion process.

Similarly, the extrusion of materials having components of natural origin, such as for example a material comprising vegetable substances and/or alkaloids for manufacturing smoke articles, requires a control of the temperature of the material so as to avoid an undesired excessive heating thereof and a resulting degradation thereof inside the barrel element, during the extrusion process.

Generally, in the operating conditions, various processing parameters such as the temperature at which the barrel element is maintained and/or the rotation speed of the screw and/or the speed for supplying the material through the supply opening and/or the torque applied to the screw by the motor and/or the capacity of the apparatus, that is the amount produced by the apparatus in kg/h, contribute to changing the temperature of the material inside the extrusion apparatus.

Furthermore, geometric characteristics of the barrel element, of the screw, and of the clearance between them, especially in large extrusion apparatuses, that is in large-capacity apparatuses contribute to the temperature change of the material inside the extrusion apparatus.

For example, increasing the rotation speed of the screw and/or the torque and/or the capacity of the apparatus, typically increases the temperature of the material with respect to a desired nominal processing temperature. Such increase in temperature is undesired especially for a material sensitive to high temperatures, such as for example a material comprising vegetable substances and/or alkaloids for producing smoke articles, given that it induces a degradation thereof or increase the likelihood of inducing a degradation.

By way of further example, increasing the size of the extrusion apparatus typically increases the space which separates the screw, that is its core, from the inner walls of the barrel element, decreasing the thermal exchange capacity with the material which typically has low thermal conductivity, for example 0.3=0.5 W/mK for tobacco-based materials. Such condition is undesired especially for a material sensitive to high temperatures, such as for example a material comprising vegetable substances and/or alkaloids for producing smoke articles, given that it induces a degradation thereof or increase the likelihood of inducing a degradation.

In order to overcome these drawbacks, one can act on the process parameters, such as the rotation speed of the screws and/or the speed for supplying the material and/or the torque and/or the capacity of the extrusion apparatus, however obtaining an undesired decrease in the productivity of the extrusion apparatus or an excessive change in the processing parameters with respect to those deemed optimal for a given material.

Furthermore, in order to overcome these drawbacks, extrusion apparatuses comprising means for conditioning the temperature of the barrel element or of the screw, are provided for in the prior art.

Although such known extrusion apparatuses and screws provided with temperature conditioning means operate appropriately in most cases, they reveal drawbacks, especially in the extrusion of materials sensitive to high temperatures and in particular in the extrusion of materials having components of natural origin, such as for example materials comprising vegetable substances and/or alkaloids for producing smoke articles.

For example, in the field of extrusion of materials comprising vegetable substances and/or alkaloids for producing smoke articles, it would be advantageous to increase the size of the extrusion apparatuses or the capacity thereof, while simultaneously ensuring the quality of the product. In particular, in this case the prior art means for conditioning the temperature of the barrel element currently only partly mitigate the drawbacks arising from inadequate control of the temperature of the material inside the barrel element.

Furthermore, inside the barrel element of the increased size extrusion apparatuses, increases the dwell time which, as a result, increases the probability or degree of degradation of the material. Such condition typically occurs in the extrusion of materials sensitive to high temperatures and in particular in the extrusion of materials having components of natural origin, such as for example materials comprising vegetable substances and/or alkaloids for producing smoke articles.

Furthermore, in the barrel element of increased size extrusion apparatuses increases the probability that, in various areas of the barrel element, the material is not at an even temperature, generating an undesired uneven flow and, as a result, a product having inhomogeneous characteristics.

Furthermore, especially in the tobacco industry and smoke articles manufacturing industry, in recent years there has simultaneously been demand for high quality of the products such as for example reconstituted tobacco sheets, and high efficiency of the apparatuses and of the plants.

As a result, there arises the need to provide a solution that at least overcomes one of the drawbacks described above.

### SUMMARY OF THE INVENTION

The task of the present invention is to provide an improvement to an extrusion and/or mixing screw for extruding and/or mixing materials, in particular temperature-sensitive material, by means of an extrusion and/or mixing apparatus.

In the context of the task outlined above, an object of the present invention relates to a screw which is configured to provide an improvement to the control, or regulation, of the temperature of the material, in particular temperature-sensitive material, during the processing thereof by means of the extrusion and/or mixing apparatus.

A further object relates to a screw which is configured to ensure quality and maintenance of desired characteristics of a material, in particular of a temperature-sensitive material, during the processing thereof using the extrusion and/or mixing apparatus.

A further object relates to a screw whose configuration allows an increase in the productivity of the extrusion and/or mixing apparatus while simultaneously ensuring quality and maintenance of desired characteristics of a material, in particular of a temperature-sensitive material.

A further object relates to a screw whose configuration allows an increase in the size of the extrusion and/or mixing apparatus while simultaneously ensuring quality and maintenance of desired characteristics of a material, in particular of a temperature-sensitive material.

A further object relates to a screw for an extrusion and/or mixing apparatus which provides for operating reliability.

A further object relates to a method for making said extrusion and/or mixing screw that is simple and reliable.

A further object relates to an extrusion and/or mixing apparatus comprising said screw for effectively extruding and/or mixing materials, in particular temperature-sensitive material.

A further object relates to a plant for obtaining effective production of one or more sheets of reconstituted material comprising vegetable substances and/or alkaloids, wherein said plant includes an extrusion and/or mixing apparatus.

The aforementioned tasks and others which will be more apparent hereinafter in the description, are attained through an extrusion and/or mixing screw, a method for making it, an extrusion and/or mixing apparatus, and a plant as defined in the independent claim. Preferred embodiments are defined in the dependent claims.

### BRIEF DESCRIPTION OF THE FIGURES

The further features and advantages of the extrusion and/or mixing screw, of the method for making it, of the extrusion and/or mixing apparatus and of the plant, will become more apparent in the following description relating to embodiments provided purely by way of non-limiting example, with reference to the figures below, wherein:
- Fig. 1 shows a perspective view of an extrusion and/or mixing screw, according to a preferred embodiment of the present invention;
- Fig. 2 shows a lateral view of the screw of Fig. 1;
- Fig. 3 shows a bottom view of the screw of Fig. 1 sectioned along a horizontal plane passing through the longitudinal axis of the screw;
- Fig. 4 shows a cross-sectional view of the screw of Fig. 2 taken along a line H-H;
- Fig. 5 shows a cross-sectional view of the screw of Fig. 2 taken along a line R-R;
- Fig. 6 shows a cross-sectional view of the screw of Fig. 2 taken along a line S-S;
- Fig. 7 shows a cross-sectional view of the screw of Fig. 2 taken along a line U-U;
- Fig. 8 shows a cross-sectional view of the screw of Fig. 2 taken along a line V-V;
- Fig. 9 shows a cross-sectional view of the screw of Fig. 2 taken along a line X-X;
- Fig. 10 shows a lateral view of the screw of Fig. 1 sectioned along a vertical plane passing through the axis of a supply conduit of the screw;
- Fig. 11 shows a lateral view of the screw of Fig. 1 sectioned along a vertical plane passing through the axis of a discharge conduit of the screw;
- Fig. 12 shows a schematic representation of an extrusion and/or mixing apparatus, according to an embodiment of the present invention;
- Fig. 13 shows a schematic representation of a plant for forming one or more sheets of reconstituted material comprising vegetable substances and/or alkaloids, according to an embodiment of the present invention;
- Fig. 14 shows comparison results of thermal simulations carried out in different conditions for an extrusion and/or mixing apparatus, according to embodiments of the present invention.

### DETAILED DESCRIPTION OF THE INVENTION

In the description below reference will be made to the processing of a material comprising tobacco. However, such reference shall be understood to be provided by way of non-limiting example, given that the present invention can be applied to the processing of any material having components of natural origin, such as for example material comprising vegetable substances and/or alkaloids, or to the processing of any other temperature-sensitive material, such as for example thermoplastic, thermosetting, expandable materials and the like.

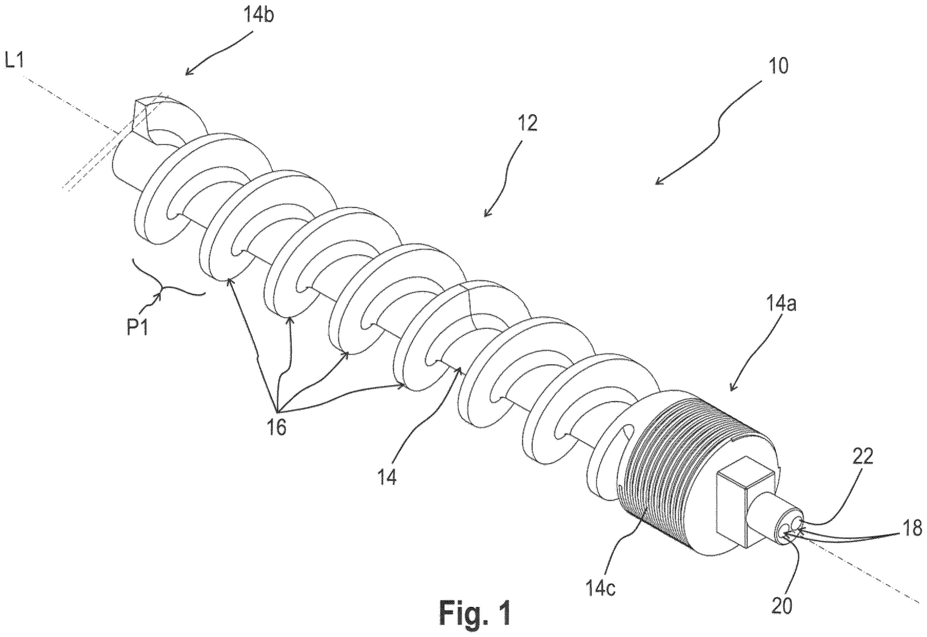

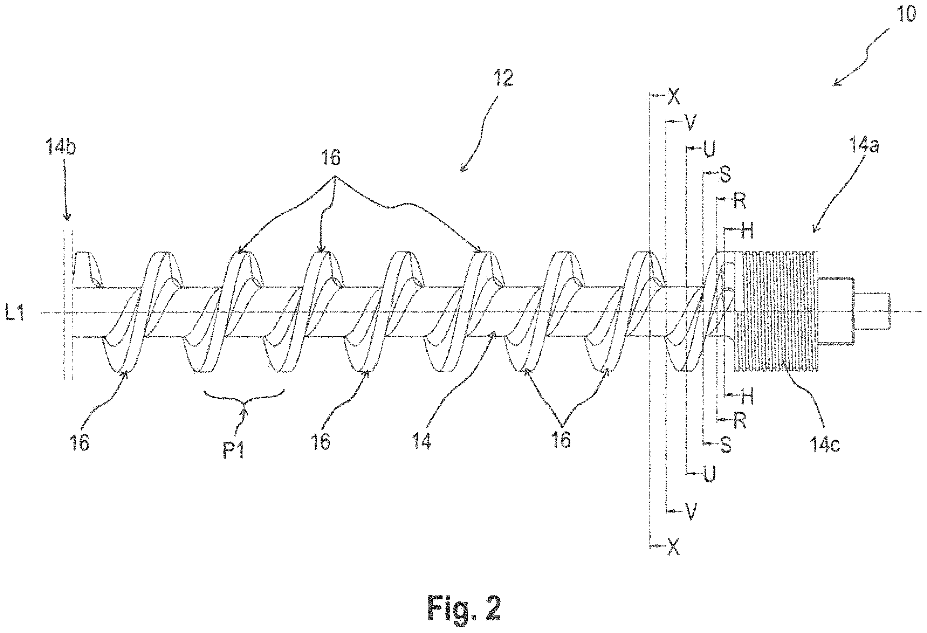

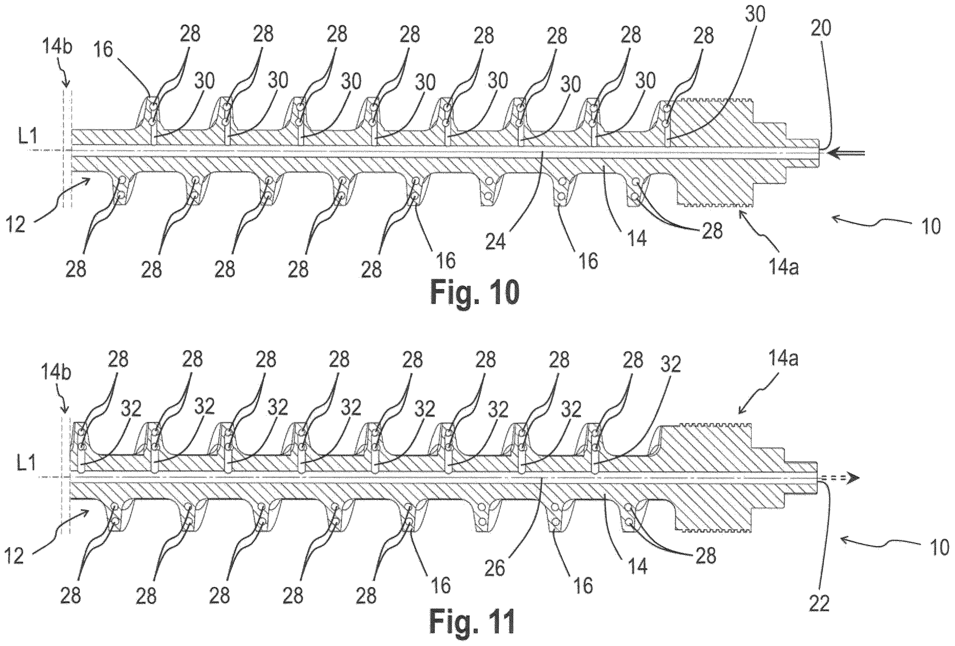

Figs. 1 to 11 show an extrusion and/or mixing screw 10, according to a preferred embodiment of the present invention, for extruding and/or mixing a material, in particular temperature-sensitive material such as for example material comprising tobacco.

The screw 10 includes an elongated body 12, preferably made of metal material such as stainless steel, in turn comprising a core 14 from which there radially protrudes, substantially integral, at least one material processing element 16. Possibly, the core 14 and said at least one material processing element 16 of the elongated body 12 are made as single piece with respect to each other.

The core 14 is substantially bar-shaped, preferably with circular cross-section, provided with two opposite bases substantially connected by a lateral surface. In particular, the core 14 extends along a longitudinal axis L1 from a first end portion 14a to a second end portion 14b, opposite to the first end portion 14a (the figures show a detail at the first end portion 14a of the screw 10 by means of an interruption of the screw 10 represented by two parallel dashed lines).

In the present embodiment, the core 14 is a substantially constant cross-sectional bar, that is profile. However, there may be provided for an embodiment in which the core 14 has a variable section and possibly increasing from the first end portion 14a to the second end portion 14b.

Furthermore, the core 14 comprises a coupling portion 14c at the first end portion 14a. The coupling portion 14c, such as for example an element formed extending radially from the core 14, is configured to allow a sealed, for example through a threaded or labyrinth portion, and preferably releasable fixing of the screw 10 to a drive system of a motor which is configured to rotate the screw 10 about the longitudinal axis L1.

Said at least one material processing element 16 is substantially formed around the core 14 extending radially protruding from its lateral surface. In other words, said at least one material processing element 16 is formed around the core 14 protruding from its lateral surface along a direction that is substantially radial, transversal or inclined with respect to the longitudinal axis L1.

In the present embodiment in which the screw 10 is adapted to process material comprising tobacco, said at least one material processing element 16 comprises a plurality of spiral portions which are arranged in succession to each other along the longitudinal axis L1 so as to form a single spiral element, possibly with a constant or variable pitch P1, which is formed around the core 14 substantially from the first end portion 14a to the second portion 14b. In particular, each of the material processing elements 16, such as the spiral portions of the spiral element, acts as a transport and/or compression element adapted to operatively process the material comprising tobacco moving it from the first end portion 14a towards the second portion 14b during the rotation of the screw 10 around its longitudinal axis L1.

However, there may be provided for other configurations of the screw 10 in which the latter may provide for one or more suitably shaped material processing elements 16, possibly different from a spiral portion, or combinations of material processing elements 16 that are different from each other.

For example, there may be provided for an embodiment in which there are provided for several groups of spiral portions staggered with respect to each other along the longitudinal axis L1, so as to form several spiral elements. Alternatively, there may be provided for an embodiment in which there are provided for one or more suitably shaped material processing elements 16 adapted to obtain a desired processing of the material processing elements through the screw 10, such as for example supplying, dosing, mixing, distribution mixing, dispersion mixing, and the like, or combinations thereof. In particular, said one or more material processing elements 16, identical or different from each other, may be arranged in various circumferential positions around the core 14 and/or along a direction parallel to the longitudinal axis L1, possibly distinct from each other.

The elongated body 12 of the screw 10 further includes a fluid conduit means 18 which extends inside the elongated body 12, that is substantially embedded inside the latter. The fluid conduit means 18 is provided with a fluid inlet 20 and with a fluid outlet 22 which are configured to place in fluid connection the inside of the fluid conduit means 18 with the external of the elongated body 12.

In the present embodiment, the fluid inlet 20 and the fluid outlet 22 are formed at the first end portion 14a of the core 14, on one of its bases. However, this selection shall not be deemed as limiting and the fluid inlet 20 and the fluid outlet 22 may provide for further positions or configurations.

The fluid conduit means 18 is adapted to receive a flow of a temperature conditioning fluid which is supplied having a determined temperature adapted to operatively control, or regulate, the temperature of at least one part of the elongated body 12 through thermal conduction of the material with which the latter is formed.

For example, in the present embodiment in which the screw 10 is adapted to process material comprising tobacco, the fluid conduit means 18 is adapted to receive a flow of cooling water, such as water at room temperature, water at temperature lower than room temperature, or water at temperature lower than the temperature of the material in the operating conditions inside the extrusion and/or mixing apparatus. However, this selection shall not be deemed as limiting and the type of temperature conditioning fluid and its temperature can be suitably selected depending on the needs.

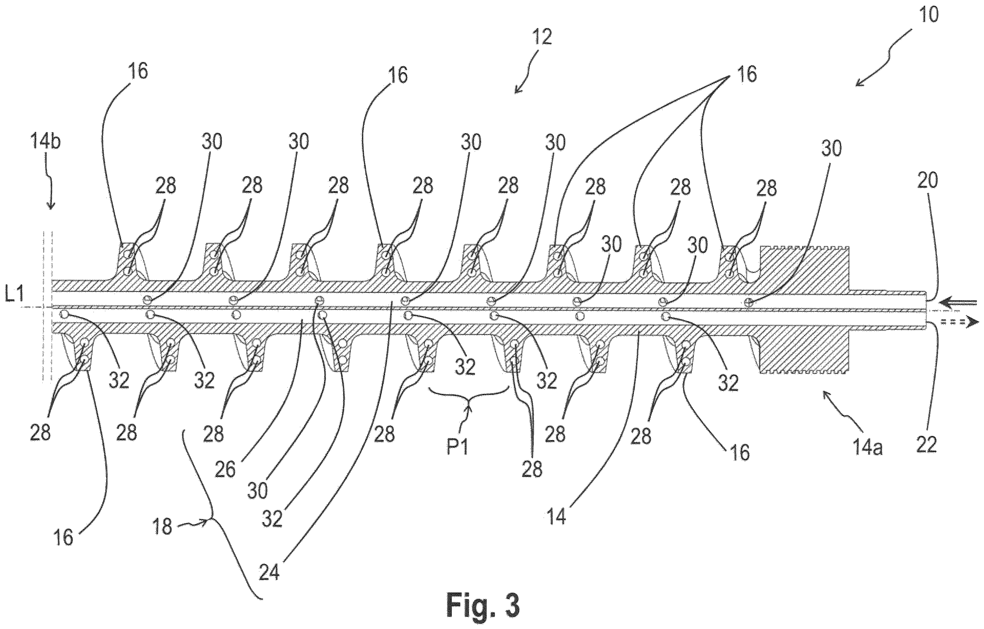

With reference to Figs. 3 to 11, and in particular from 4 to 9, according to the present invention, the fluid conduit means 18 is configured so as to extend, substantially embedded, at least partially inside at least one part of said at least one material processing element 16. In the present most preferred embodiment, the fluid conduit means 18 is configured so as to extend at least partially inside at least one part of said at least one material processing element 16, and at least partially inside at least one part of the of the core 14.

Therefore, as better explained below, said at least one material processing element 16, formed extending radially protruding from the core 14, internally provides for at least one conduit, or a conduit portion, which is configured to at least partially define said fluid conduit means 18.

In other words, when seen along the direction of the longitudinal axis L1, the fluid conduit means 18 provides for at least one portion which extends, inside said at least one material processing element 16, at a radial distance from the longitudinal L1 that is greater than that of the of the lateral surface of the core 14.

Advantageously, in this condition, the presence of at least one part of the fluid conduit means 18 inside said at least one material processing element 16 ensures, in the operating conditions, a particularly reliable control, or a regulation, of the actual temperature of the elongated body 12 of the screw 10 and, as a result, of the material inside the barrel element of an extrusion and/or mixing apparatus comprising said screw 10.

As a matter of fact, without being bound by the theory, a thermal conditioning of said at least one material processing element 16 which, in operating conditions, is a component which acts directly in contact with the temperature-sensitive material, is ensured particularly effectively in this condition.

Therefore, in the present embodiment in which the screw 10 is adapted to process material comprising tobacco, the fluid conduit means 18 is configured to supply a flow of cooling water which cools and/or maintains a given temperature of said at least one material processing element 16, so as to reduce the probability of degradation of the material comprising tobacco, or remove it.

As a result, in this condition, the screw 10 is adapted to reliably guarantee the quality and maintenance of desired characteristics of the temperature-sensitive material, such as material comprising tobacco, during its processing through an extrusion and/or mixing apparatus.

Furthermore, advantageously, in this condition, the screw 10 allows an increase in the productivity and/or in the size of an extrusion and/or mixing apparatus in which it is installed while simultaneously ensuring the quality and maintenance of the desired characteristics of the material. As a matter of fact, providing an effective thermal conditioning of the elongated body 12 and of said at least one material processing element 16, allows to widely select process parameters, such as the rotation speed of the screw and/or the speed for supplying the material and/or torque from motor and/or capacity of the extrusion and/or mixing apparatus, and at the same time avoid degradation of the temperature-sensitive material, such as material comprising tobacco.

In particular still with reference to Figs. 3 to 11, in the present preferred embodiment the fluid conduit means 18 comprises at least one supply conduit 24, at least one discharge conduit 26, and at least one connection conduit 28.

Said at least one supply conduit 24 (one supply conduit 24 in the present embodiment) is provided with said fluid inlet 20 of the fluid conduit means 18.

The supply conduit 24 is formed, that is it is comprised, inside the core 14 preferably extending from the first end portion 14a to the second portion 14b, preferably parallel to the longitudinal axis L1 of the core 14.

The supply conduit 24 is adapted to receive, through the fluid inlet 20, the flow of the temperature conditioning fluid which, flowing into the fluid conduit means 18 at a given temperature, is adapted to operatively control, or regulate, the temperature of at least one part of the elongated body 12 (in the figures the inflow of the temperature conditioning fluid is represented with a solid double arrow).

Said at least one discharge conduit 26 (one discharge conduit 26 in the present embodiment) is provided with said fluid outlet 22 of the fluid conduit means 18.

The discharge conduit 26 is formed, that is it is comprised, inside the core 14 preferably extending from the first end portion 14a to the second portion 14b, preferably parallel to the longitudinal axis L1 of the core 14.

The discharge conduit 26 is adapted to discharge, through the fluid outlet 22, the flow of the temperature conditioning fluid which has operatively circulated in the fluid conduit means 18 inside the elongated body 12 of the screw 10 (in the figures, the outflow of the temperature conditioning fluid is represented with a dashed double arrow).

Said at least one connection conduit 28 (a plurality of connection conduits 28 in the present embodiment) is adapted to mutually fluidly connect the supply conduit 24 and the discharge conduit 26.

Said at least one connection conduit 28 is formed, that is it is comprised, substantially embedded, inside said at least one material processing element 16 extending along a spiral-like-trajectory portion around the core 14.

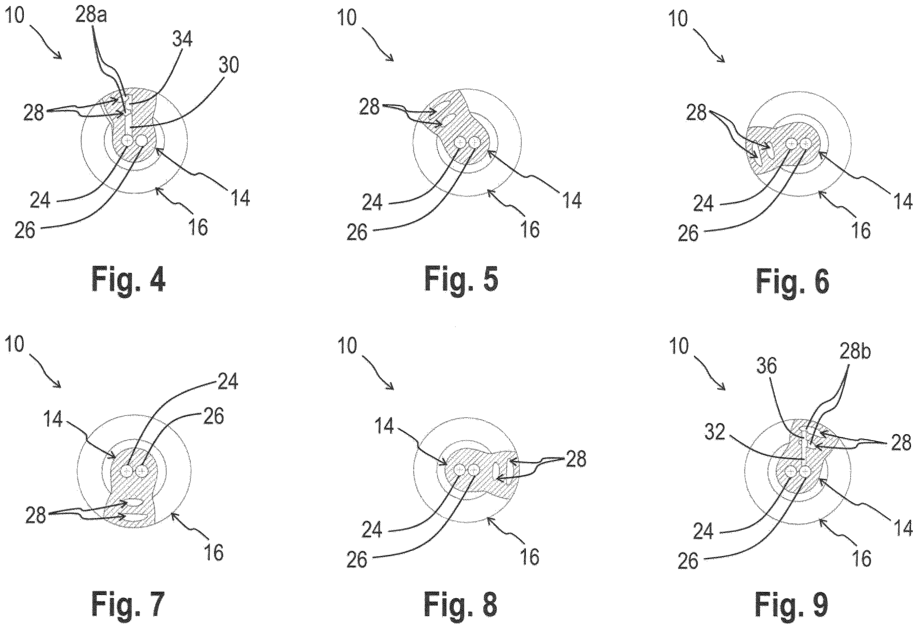

In particular, said at least one connection conduit 28 provides for a first conduit end 28a and a second conduit end 28b, opposite to the first conduit end 28a, which are fluidly connected to the supply conduit 24 and to the discharge conduit 26 through, respectively, a supply hole 30 and a discharge hole 32, substantially radial (the conduit ends, first 28a and second 28b are better shown and numbered in Figs. 4 and 9 ).

The supply 30 and discharge 32 holes, are formed in the core 14 extending, along a substantially radial direction, respectively from the supply conduit 24 and from the discharge conduit 26 so as to place in fluid communication these latter with the respective first conduit end 28a and second conduit end 28b of said at least one connection conduit 28.

In particular, said at least one connection conduit 28 is arranged substantially embedded, at least partially inside at least one part of said at least one material processing element 16.

In this condition, there are obtained the advantages described above relatively to the control of the temperature of the elongated body 12 and, at the same time, a construction which is easy to design based on desired characteristics of the screw 10.

Preferably, such as for example in the present embodiment in which said at least one material processing element 16 comprises a plurality of spiral portions forming a single spiral element, the screw 10 comprises a plurality of connection conduits 28 arranged at positions spaced longitudinally from each other, for example one after the other or in succession, substantially along the longitudinal axis L1, and inside a respective material processing element 16, substantially at each pitch P1 of the spiral. In other words, the screw 10 comprising a plurality of material processing elements 16 arranged substantially along a direction parallel to said longitudinal axis L1 in which said at least one connection conduit 28 is formed inside at least one part of each material processing element 16, preferably from the first end portion 14a to the second end portion 14b of the core 14. In particular, each of said plurality of connection conduits 28 is preferably adapted to mutually fluidly connect the supply conduit 24 and the discharge conduit 26 through the respective first conduit end 28a and second conduit end 28b. Therefore, the fluid conduit means 18 comprises a plurality of connection conduits 28, at least one supply conduit 24 and at least one discharge conduit 26. The plurality of connection conduits 28 are arranged at least partially inside at least one part of said at least one material processing element 16. Said at least one supply conduit 24 is provided with the fluid inlet 20 and with a plurality of supply holes 30. The holes of said plurality of supply holes 30 are formed substantially radially on the supply conduit 24 and arranged in positions spaced longitudinally from each other, for example one after the other or in succession along a direction parallel to the longitudinal axis L1, and in which each supply hole 30 is adapted to fluidly connect the fluid inlet 20 with a first conduit end 28a of at least one respective connection conduit 28. Said at least one discharge conduit 26 is provided with the fluid outlet 22 and with a plurality of discharge holes 32. The holes of said plurality of discharge holes 32 are formed substantially radially on the discharge conduit 26 and arranged at positions spaced longitudinally from each other, for example one after the other or in succession along a direction parallel to the longitudinal axis L1, and in which each discharge hole 32 is adapted to fluidly connect the fluid outlet 22 with a second conduit end 28b of at least one respective connection conduit 28.

This condition allows to accurately control the temperature of the elongated body 12 along its longitudinal extension given that each material processing element 16, that is each pitch P1 of the spiral, is substantially provided with a respective connection conduit 28, making the thermal conditioning substantially homogeneous. Furthermore, such construction is easy to design depending on desired characteristics of the screw 10, such as for example the type, number and arrangement of the plurality of material processing elements 16.

Furthermore, given that each connection conduit 28 is fluidly connected to the supply 24 and discharge 26 conduits, it is possible to more effectively ensure a desired temperature of the temperature conditioning fluid even for material processing elements 16 distal from the fluid inlet 20. Furthermore, a greater temperature homogeneity of the elongated body 12 along its longitudinal extension can be ensured more effectively for the same reason.

Preferably, said at least one material processing element 16 provides for a pitch P1, and at a plurality of pitches P1, or more preferably at each pitch P1, there are formed at least one connection conduit 28, at least one supply hole 30, and at least one discharge hole 32.

Preferably, such as for example in the present embodiment in which said at least one material processing element 16 comprises a plurality of spiral portions forming a single spiral element, each material processing element 16, that is each pitch P1 of the spiral, comprises two or more connection conduits 28. In other words, the screw 10 comprises a plurality of connection conduits 28 which are arranged, inside said at least one material processing element 16, at least partially in radially distinct positions. Therefore, preferably, said at least one material processing element 16 provides for a pitch P1, and at one or more pitches P1 there is formed a plurality of connection conduits 28 in radially distinct positions.

In particular, in the present embodiment, the two connection conduits 28 of each material processing element 16, that is of each pitch P1 of the spiral, are in fluid connection with the respective supply hole 30 and discharge hole 32 preferably respectively through a branching conduit portion 34 and a manifold conduit portion 36 (the branching 34 and manifold 36 conduit portions are better shown and numbered in Figs. 4 and 9 ).

This condition allows to further accurately control the temperature of the elongated body 12 given that each material processing element 16, that is each pitch P1 of the spiral, is substantially provided with a respective plurality of connection conduits 28, making the thermal conditioning substantially faster and more effective.

Described below is a method for making the screw 10, in a preferred embodiment of the present invention.

The method comprises a step for forming at least one part of the core 14, extending along a longitudinal axis L1, using a first manufacturing method. As mentioned above, the core 14 is substantially bar-shaped, preferably with circular cross-section, provided with two opposite bases substantially connected by a lateral surface.

In particular, said at least one part of the core 14 comprises at least one part of at least one supply conduit 24 provided with the fluid inlet 20, and at least one part of at least one discharge conduit 26 provided with the fluid outlet 22. The supply conduit 24 is provided with at least one supply hole 30, while the discharge conduit 26 is provided with at least one discharge hole 32. Said at least one supply 30 and discharge 32 hole are configured to place in fluid communication the respective supply 24 and discharge 26 conduit with the lateral surface of the core 14.

The method further comprises a forming step on said at least one part of said core 14 of at least a part of said at least one material processing element 16, formed extending radially protruding from said core 14, using a second manufacturing method. Said at least one material processing element 16 is made integral with the core 14.

In particular, said at least one material processing element 16 comprises embedded at least one part of at least one connection conduit 28 adapted to mutually fluidly connect said at least one supply hole 30 and said at least one discharge hole 32 of the core 14.

In other words, said at least one material processing element 16 is formed and arranged on the lateral surface of the core 14 so that said respective at least one connection conduit 28 is in fluid communication with the supply conduit 24 and the discharge conduit 26 respectively through its first 28a and second 28b conduit ends.

Advantageously, this allows to obtain the screw 10 having the features and advantages described above.

In a particularly preferred embodiment, said second manufacturing method includes an additive manufacturing method.

Typically, the additive manufacturing method, such as for example a 3D printing method, in turn comprises steps of generating a digital representation of a configuration of said at least one material processing element 16 comprising embedded at least one connection conduit 28; storing the digital representation on a database paired to a computer; and forming said at least one material processing element 16 (comprising said at least one connection conduit 28) through an additive manufacturing method in which the computer instructs an additive manufacturing machine, such as for example a 3D printer, for forming on the core 14 said at least one material processing element 16 comprising at least one connection conduit 28.

Advantageously, this allows to obtain the screw 10 in a particularly simple and reliable manner.

As a matter of fact, the first manufacturing method, for forming the core 14, may comprise a subtractive manufacturing method, such as for example a turning and/or milling process starting from a bar body. While, the second manufacturing method, for forming the material processing element 16, includes an additive manufacturing method, such as for example a 3D printing process.

In this condition, combining two different manufacturing methods for forming the core 14 and the material processing element 16, allows to obtain the screw 10 in a particularly simple and reliable manner.

Possibly, in a potential further embodiment, both the first manufacturing method, for forming the core 14, and the second manufacturing method, for forming the material processing element 16, include an additive manufacturing method.

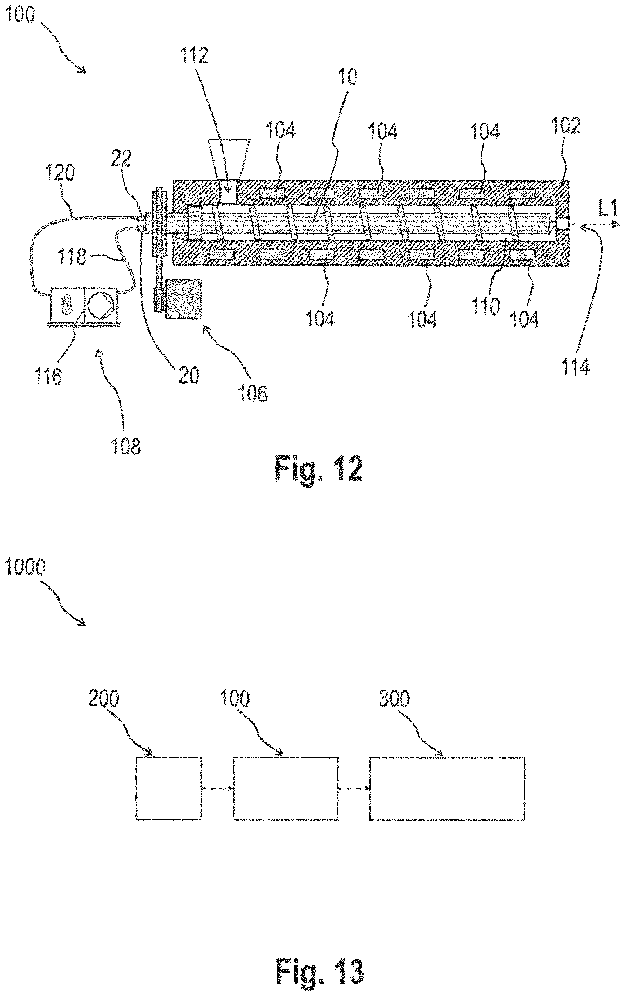

With reference to Fig. 12, there is now shown an extrusion and/or mixing apparatus 100, according to a preferred embodiment of the present invention, for extruding and/or mixing a material, in particular temperature-sensitive material such as for example material comprising tobacco.

The extrusion and/or mixing apparatus 100 comprises a barrel element 102, heating and/or cooling means 104, at least one screw 10 according to the present invention, actuator means 106, and conditioning fluid supply means 108.

The barrel element 102, also typically referred to with the expressions "extrusion barrel", or "barrel", is a substantially elongated shaped and internally hollow element forming an extrusion and/or mixing duct 110, substantially defining a tubular or tunnel-shaped element. The barrel element 102 is provided with a supply opening 112, through which the temperature-sensitive material, such as for example material comprising tobacco, is supplied into the cavity, and preferably an extrusion opening 114, through which the extruded material flows out from the extrusion and/or mixing duct 110.

Heating and/or cooling means 104 which are adapted to heat and/or cool the body of the barrel element 102, or its areas possibly in a differentiated manner, depending on the needs, are arranged on the outer surface and/or in the body of the barrel element 102.

For example, in the present embodiment in which the extrusion and/or mixing apparatus 100 is adapted to process material comprising tobacco, the heating and/or cooling means 104 comprise one or more pipes suitably arranged in the body of the barrel element 102 and adapted to receive a flow of cooling water from a suitable pumping system (not shown in the figures), so as to condition the temperature of the barrel element 102, in particular lowering it. However, the heating and/or cooling means 104 may provide for further configurations, suitably selected depending on the needs.

At least one screw 10, having the features disclosed in any of the embodiments described above according to the present invention, or combinations thereof, is arranged inside the extrusion and/or mixing duct 110 of the barrel element 102.

In particular, said at least one screw 10 can be rotated around its longitudinal axis L1 through actuator means 106 including, for example, a motor and a respective transmission system.

Lastly, the conditioning fluid supply means 108 are in fluid connection with the fluid inlet 20 and the fluid outlet 22 of said at least one screw 10 so as to supply a flow of temperature conditioning fluid to the fluid conduit means 18 of said at least one screw 10.

The conditioning fluid supply means 108 are adapted to supply a flow of temperature conditioning fluid to said at least one screw 10 to operatively increase its temperature and/or cool its elongated body 12 and said at least one material processing element 16, so as to control the actual temperature of the material inside the extrusion and/or mixing duct 110 of the barrel element 102.

The conditioning fluid supply means 108 may provide for various constructions depending on the needs.

For example, in the present embodiment in which the extrusion and/or mixing apparatus 100 is adapted to process material comprising tobacco, the conditioning fluid supply means 108 comprise a cooling system configured to supply a flow of cooling fluid, such as cooling water, which is operatively adapted to control the actual temperature of the material comprising tobacco inside the extrusion and/or mixing duct 110 of the barrel element 102.

In this case, said cooling system may comprise a cooling supply unit 116, a supply line 118, and a delivery line 120 in mutual fluid connection. In particular, the supply line 118 is in fluid connection, on the one hand, with the fluid inlet 20 of the screw 10 and, on the other hand, with the cooling supply unit 116 which is adapted to cool water to a given temperature and supply it to the fluid conduit means 18 of the screw 10 through the supply line 118. While, the delivery line 120 is in fluid connection, on the one hand, with the fluid outlet 22 of the screw 10 so as to receive the water flowing out from the fluid conduit means 18 and, on the other hand, with the cooling supply unit 116 which is adapted to cool the water flowing out from the fluid conduit means 18 to the given temperature and supply it once again to the fluid conduit means 18 through the supply line 118. However, this selection shall not be deemed as limiting and the conditioning fluid supply means 108, or the cooling system, may provide for further configurations.

Advantageously, in this condition, the extrusion and/or mixing apparatus 100, comprising the screw 10 according to the present invention, provides for the advantages described above.

With reference to Fig. 13, there is now shown a schematic representation of a plant 1000 which is particularly adapted to make one or more sheets of reconstituted material comprising vegetable substances and/or alkaloids, such as for example tobacco.

Preferably, the material comprising one or more vegetable substances and/or alkaloids is a dough material (hereinafter referred to as "dough" or "doughy mixture") including tobacco powder, a binding agent and possibly water. However, this selection shall not be deemed as limiting, and the dough may include powder of other vegetable substances and/or alkaloids, or combinations thereof.

The plant 1000 includes, in this order, a mixing unit 200, an extrusion and/or mixing apparatus 100 and a sheet forming unit 300.

The mixing unit 200 is configured to mix powdered material comprising vegetable substances and/or alkaloids, such as for example tobacco powder, with a binding agent, such as for example a humectant gel, and possibly water so as to form a dough containing said tobacco powder.

The mixing unit 200 may provide for various configurations, for example, in a possible embodiment comprises a mixing machine adapted to receive one or more tobacco powders, binding agent and possibly water from respective metering devices. However, this selection shall not be deemed as limiting and the mixing unit 200 may provide for further configurations.

While, downstream of the mixing unit 200, the extrusion and/or mixing apparatus 100 is adapted to extrude the tobacco-based dough, after the mixing step carried out by means of the mixing unit 200, so as to produce and dispense an extruded portion or section formed by the tobacco-based dough. Possibly, the extrusion and/or mixing apparatus 100 may be provided with a granulation apparatus adapted to cut and/or grind and/or shred said extruded portion or section so as to substantially obtain granules formed from the tobacco-based dough.

Lastly, downstream of the extrusion and/or mixing apparatus 100, the sheet forming unit 300 is configured to form one or more sheets through the extruded portion or section formed by the tobacco-based dough, or its granules, after the extrusion step carried out using the extrusion and/or mixing apparatus 100.

The sheet forming unit 300 may provide for various configurations, for example, in a possible embodiment it comprises a roller lamination machine. However, this selection shall not be deemed as limiting and the sheet forming unit 300 may provide for further configurations.

In particular, the extrusion and/or mixing apparatus 100 includes a barrel element 102 which is provided with cooling means 104 which are adapted to cool the body of the barrel element 102, such as one or more pipes suitably arranged in the body of the barrel element 102 and adapted to receive a flow of cooling water from a suitable pumping system.

Furthermore, the extrusion and/or mixing apparatus 100 includes an extrusion and/or mixing screw arranged in the barrel element 102. The extrusion and/or mixing screw, in turn, comprises a fluid conduit means adapted to receive a flow of a cooling fluid operatively adapted to regulate a temperature of at least one part of the extrusion and/or mixing screw.

For example, the fluid conduit means of the extrusion and/or mixing screw is adapted to receive a flow of cooling water, such as water at room temperature, water at temperature lower than room temperature, or water at temperature lower than the temperature of the material in the operating conditions inside the extrusion and/or mixing apparatus 100.

Advantageously, in this condition, the combination of the cooling of the barrel element 102, through cooling means 104, and of the extrusion and/or mixing screw ensures a particularly reliable control, or a regulation, of the actual temperature of the reconstituted material comprising vegetable substances and/or alkaloids, such as for example tobacco, during the processing.

As a result, the sheet formed using the plant 1000 provides for high quality and maintenance of desired characteristics given that the probability of degradation of the material comprising tobacco is reduced. Furthermore, this condition allows to increase the productivity of the plant 1000.

In a more preferred embodiment, the extrusion and/or mixing apparatus 100 includes an extrusion and/or mixing screw 10 according to any of the embodiments described above with reference to Figs. 1 to 11, or combinations thereof.

In this embodiment, the screw 10 includes the elongated body 12 comprising the core 14 extending along the longitudinal axis L1, and at least one material processing element 16 formed extending radially protruding from the core 14. Furthermore, the screw 10 comprises the fluid conduit means 18 which is provided with the fluid inlet 20 and with the fluid outlet 22 and it is adapted to receive a flow of a cooling fluid operatively adapted to regulate a temperature of at least one part of the elongated body 12. In particular, the fluid conduit means 18 is configured so as to extend, substantially embedded, at least partially inside at least one part of said at least one material processing element 16.

Advantageously, in this condition, the combination of the cooling of the barrel element 102, through the cooling means 104, and of the screw 10, having the features according to any of the embodiments described above ensures a further reliable control, or a regulation, of the actual temperature of the reconstituted material comprising vegetable substances and/or alkaloids, such as for example tobacco, during the processing.

As a result, the sheet formed using the plant 1000 further reliably provides for high quality and maintenance of desired characteristics given that the probability of degradation of the material comprising tobacco is reduced further. Furthermore, this condition allows to increase the productivity of the plant 1000 further.

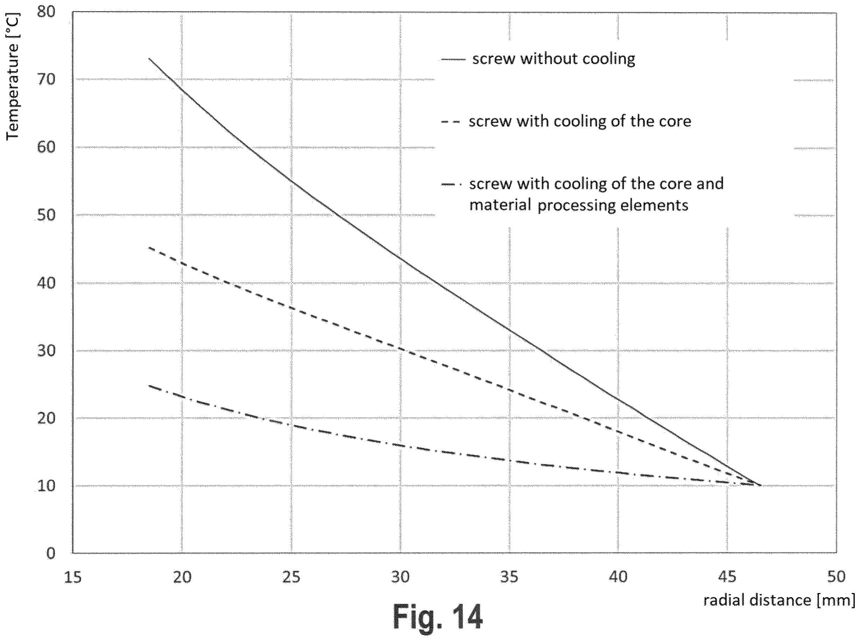

With reference to Fig. 14, there are now shown the comparison results of thermal simulations (thermal analysis) carried out in different conditions for an extrusion and/or mixing apparatus which is preferably used for processing reconstituted material comprising vegetable substances and/or alkaloids, such as tobacco, for example in a plant 1000.

Fig. 14 shows temperature profiles obtained with suitable finite elements simulation software, under stationary regimen conditions, by inputting suitable simulation parameters, such as geometric parameters (of the extrusion and/or mixing screw, and of the extrusion and/or mixing apparatus), thermal conductivity parameters of the materials (of the screw, of the apparatus, and of the reconstituted material comprising tobacco), operating parameters (of the screw, and of the apparatus), and temperature of the cooling water (of the barrel element of the apparatus, and possibly of the screw), and the like.

The temperature profiles were calculated at various radial distances from the longitudinal axis of the core of the screw. Such radial distances are comprised between about 18 mm (corresponding to the lateral surface of the core of the screw) and about 47 mm (substantially corresponding to the inner walls of the duct of the barrel element). Furthermore, the temperature profiles were calculated at the same predetermined longitudinal position of the screw which is comprised between two consecutive material processing elements.

In particular, a solid line is used to show a temperature profile of the reconstituted material comprising tobacco as a function of the radial distance from the longitudinal axis of the core of the screw, should the latter not provide for any cooling.

Furthermore, a dashed line is used to show a temperature profile of the reconstituted material comprising tobacco as a function of the radial distance from the longitudinal axis of the core of the screw, should the latter provide for a cooling of the core alone.

Lastly, a dashed-solid line is used to show a temperature profile of the reconstituted material comprising tobacco as a function of the radial distance from the longitudinal axis of the core of the screw, should the latter provide for a cooling both of its core and the material processing elements.

From the comparison of the temperature profiles, for example considering the integral subtended by the curves, the effectiveness that can be obtained according to the present invention is clear. In particular, with respect to the case in which the screw does not provide for any cooling, it is clear that there can be obtained a more effective cooling of the reconstituted material comprising tobacco using, besides the cooling of the barrel element, also a cooling of the core of the screw, obtaining an about 30% decrease in the temperature, and, even more preferably, both of its core and of the material processing elements, obtaining a surprising approximate 60% decrease in the temperature. It should be observed that a greater cooling difference can be detected in proximity of the body of the screw, that is at smaller radial distances, given that the three profiles converge in the same temperature at the inner walls of the duct of the barrel element which is cooled and, in the three simulations, it provides for the same temperature.

It is clear that further embodiments of the present invention can be provided for with respect to what has been described so far, without departing from the claimed scope of protection.

For example, in the description above, said at least one material processing element 16 has been described as a spiral portion of a single spiral element. However, said at least one material processing element 16 may consist of the entire spiral element.

Furthermore, said at least one material processing element 16 may provide for any adapted configuration depending on the application of the screw 10.

For example, said at least one material processing element 16 may be a spiral portion of a spiral element, which acts as a transport and/or compression element, or a cam portion, which acts as a mixing element, distribution mixing element, or dispersion mixing element, or a portion with another form, or combinations thereof.

Furthermore, in the description above the elongated body 12 of the screw 10 has been described as obtained from a core 14 made as single piece from which there radially protrudes from said at least one material processing element 16. However, there may be provided for an embodiment in which the elongated body 12 of the screw 10 is formed by a plurality of segments of a screw formed distinct and which can be fixed longitudinally releasably with respect to each other. In particular, in this possible embodiment each of the plurality of segments comprises a part of the core 14 from which there possibly extends radially protruding at least one part of said at least one material processing element 16 in turn comprising at least one part of said at least one connection conduit 28.

Furthermore, in the description above, the plurality of connection conduits 28 are formed inside at least one part of each of the plurality of material processing elements 16. However, there may be provided for a screw 10, comprising a plurality of material processing elements 16 arranged along a direction parallel to said longitudinal axis L1 in which said at least one connection conduit 28 is formed inside at least one part of some of the material processing elements 16.

In the light of the above, it is clear that significant results have been achieved, overcoming the drawbacks of the prior art, by improving an extrusion and/or mixing screw 10 for extruding and/or mixing materials, in particular temperature-sensitive material, through an extrusion and/or mixing apparatus.

The screw 10 is configured to improve the control the temperature of the material, in particular temperature-sensitive material, during the processing thereof by means of the extrusion and/or mixing apparatus.

Furthermore, the screw 10 is configured to reliably ensure the quality and maintenance of desired characteristics of a material, in particular of a temperature-sensitive material, during the processing thereof using the extrusion and/or mixing apparatus.

Furthermore, the screw 10 allows to increase the productivity and/or the size of the extrusion and/or mixing apparatus while simultaneously ensuring quality and maintenance of desired characteristics of a material, in particular of a temperature-sensitive material.

Furthermore, the screw 10 provides for a configuration adapted to ensure the operating reliability of the extrusion and/or mixing apparatus.

Furthermore, the method for making the screw 10 is simple and reliable.

Furthermore, the extrusion and/or mixing apparatus 100 comprising the screw 10 ensures an increase in the productivity and/or in the size and, at the same time, the quality and maintenance of desired characteristics of a material, in particular of a temperature-sensitive material.

Lastly, the plant 1000 for the production of one or more sheets of reconstituted material comprising vegetable substances and/or alkaloids, ensures an increase in the productivity and, at the same time, the quality and maintenance of desired characteristics of a particularly temperature-sensitive material, such as reconstituted material comprising vegetable substances and/or alkaloids.

Naturally, the materials and equipment used to implement the present invention, as well as the shape and size of the individual components, may be the most appropriate depending on the specific requirements.

## Claims

1. Extruding and/or mixing screw (10) for extruding and/or mixing a material, said screw (10) including an elongated body (12) comprising:
- a core (14) extending along a longitudinal axis (L1),
- at least one material processing element (16) extending radially protruding from said core (14), and
- fluid conduit means (18) provided with a fluid inlet (20) and a fluid outlet (22), said fluid conduit means (18) being adapted to receive a flow of a temperature conditioning fluid operatively adapted to regulate a temperature of at least a part of said elongated body (12),
**characterised in that**
said fluid conduit means (18) is configured so as to at least partially extend inside at least a part of said at least one material processing element (16).

2. The screw (10) according to claim 1, wherein said at least one material processing element (16) comprises at least one conduit (28) configured to at least partially define said fluid conduit means (18).

3. The screw (10) according to claim 1 or 2, wherein said fluid conduit means (18) comprise:
- at least one supply conduit (24) provided with said fluid inlet (20),
- at least one discharge conduit (26) provided with said fluid outlet (22),
- at least one connection conduit (28) adapted to mutually fluidly connect said at least one supply conduit (24) and said at least one discharge conduit (26),
said at least one connection conduit (28) being at least partially arranged inside at least a part of said at least one material processing element (16).

4. The screw (10) according to claim 3, wherein said at least one supply conduit (24) and said at least one discharge conduit (26) are formed inside said core (14).

5. The screw (10) according to any of claims 3 or 4, comprising a plurality of material processing elements (16) along a direction parallel to said longitudinal axis (L1), wherein said at least one connection conduit (28) is formed inside at least a part of each material processing element (16).

6. The screw (10) according to any of the preceding claims, wherein said fluid conduit means (18) comprise:
- a plurality of connection conduits (28) arranged at least partially inside at least a part of said at least one material processing element (16),
- at least one supply conduit (24) provided with said fluid inlet (20) and with a plurality of supply holes (30) wherein the latter are substantially radial and arranged at longitudinally spaced positions, each supply hole (30) being adapted to fluidly connect said fluid inlet (20) with a first conduit end (28a) of at least one respective connection conduit (28), and
- at least one discharge conduit (26) provided with said fluid outlet (22) and with a plurality of discharge holes (32) wherein the latter are substantially radial and arranged at longitudinally spaced positions, each discharge hole (32) being adapted to fluidly connect said fluid outlet (22) with a second conduit end (28b) of at least one respective connection conduit (28).

7. The screw (10) according to claim 6, wherein said at least one material processing element (16) provides for a pitch (P1), and at a plurality of pitches (P1) there are formed at least one connection conduit (28), at least one supply hole (30), and at least one discharge hole (32).

8. The screw (10) according to claim 6 or 7, wherein said at least one material processing element (16) provides for a pitch (P1), and at each pitch (P1) there are formed at least one connection conduit (28), at least one supply hole (30), and at least one discharge hole (32).

9. The screw (10) according to any of the preceding claims, wherein said at least one supply conduit (24) and said at least one discharge conduit (26) are formed inside said core (14) extending substantially from a first end portion (14a) to a second end portion (14b) of said core (14).

10. The screw (10) according to any of the preceding claims, wherein said at least one material processing element (16) provides for a pitch (P1), and at one or more pitches (P1) there is formed a plurality of connection conduits (28) in radially distinct positions.

11. Extrusion and/or mixing apparatus (100) comprising:
- a barrel element (102),
- at least one screw (10), according to any of the preceding claims, arranged in said barrel element (102),
- actuator means (106) configured to rotate said at least one screw (10) about the respective longitudinal axis (L1), and
- conditioning fluid supply means (108) in fluid connection with said fluid inlet (20) and fluid outlet (22) of said at least one screw (10), said conditioning fluid supply means (108) being adapted to supply a flow of said temperature conditioning fluid to said fluid conduit means (18).

12. Plant (1000) for the production of one or more sheets made of reconstituted material comprising vegetable substances and/or alkaloids, said plant (1000) including:
- a mixing unit (200) configured to mix a binding agent and powdered material comprising vegetable substances and/or alkaloids, so as to form a doughy mixture,
- an extrusion and/or mixing apparatus (100) adapted to extrude said doughy mixture comprising vegetable substances and/or alkaloids, and
- a sheet forming unit (300) configured to form one or more sheets by means of said extruded doughy mixture, wherein
said extrusion and/or mixing apparatus (100) comprises:
- cooling means (104) adapted to cool a barrel element (102) of said extrusion and/or mixing apparatus (100), and
- at least one extrusion and/or mixing screw comprising a fluid conduit means adapted to receive a flow of a cooling fluid operatively adapted to regulate a temperature of at least a part of said extrusion and/or mixing screw.

13. The plant (1000) according to the preceding claim, wherein at least one of said at least one extrusion and/or mixing screw is a screw (10) according to any of claims 1 to 5.

14. Method for making a screw (10) according to any of claims 1 to 5, comprising the steps of:
- forming, using a first manufacturing method, at least a part of a core (14) extending along a longitudinal axis (L1),
said at least a part of a core (14) comprising at least a part of at least one supply conduit (24) provided with said fluid inlet (20), and at least a part of at least one discharge conduit (26) provided with said fluid outlet (22), wherein
said supply conduit (24) and said discharge conduit (26) are each provided with respective at least one supply hole (30) and at least one discharge hole (32) configured to place in fluid communication the respective conduit (24, 26) with the lateral surface of the core (14), and
- forming on said at least a part of said core (14), using a second manufacturing method, at least a part of at least one material processing element (16) extending radially protruding from said core (14), wherein
said at least one material processing element (16) comprises at least a part of at least one connection conduit (28) adapted to mutually fluidly connect said at least one supply hole (30) and said at least one discharge hole (32).

15. The method for making a screw (10) according to the preceding claim, wherein said second manufacturing method includes an additive manufacturing method.
